# EUROPÄISCHE PATENTSCHRIFT

(11) **EP 3 501 723 B1**
(45) Veröffentlichungstag und Bekanntmachung des Hinweises auf die Patenterteilung: **09.09.2020**
(21) Anmeldenummer: 18206367.7
(22) Anmeldetag: 15.11.2018
(51) Int. Cl.: B23K 26/16, B23K 26/70, B08B 15/00, B23K 37/06, B08B 15/02

(54) **LASERBEARBEITUNGSVORRICHTUNG ZUM BEARBEITEN VON WERKSTÜCKEN MITTELS LASER**
LASER MACHINING APPARATUS FOR MACHINING WORKPIECES USING A LASER
DISPOSITIF D'USINAGE AU LASER DESTINÉ À USINER DES PIÈCES À USINER À L'AIDE DU LASER

(30) Priorität: 11.12.2017 DE 102017129479
(43) Veröffentlichungstag der Anmeldung: 26.06.2019
(73) Patentinhaber: Trumpf Laser- und Systemtechnik GmbH, 71254 Ditzingen (DE)
(72) Erfinder: SPEKER, Nicolai, 74385 Pleidelsheim (DE); WIRNITZER, Markus, 71263 Weil der Stadt (DE); FISCHER, Gunter, 71297 Mönsheim (DE); SAUTTER, Björn, 70437 Stuttgart (DE)
(74) Vertreter: Kohler Schmid Möbus Patentanwälte

(56) Entgegenhaltungen:
- EP-A1- 3 213 859
- WO-A1-2011/091650
- WO-A1-2013/178281
- JP-A- 2002 119 932
- JP-B2- 5 500 914

## Beschreibung

Die Erfindung betrifft eine Laserbearbeitungsvorrichtung zum Bearbeiten von Werkstücken mittels Laser, mit einer Laserbearbeitungseinheit, mit einer Einhausung, mit einem im Innern der Einhausung vorgesehenen Arbeitsraum und mit einer Luftfördervorrichtung,
- wobei in dem Arbeitsraum eine Werkstückauflage für ein zu bearbeitendes Werkstück angeordnet ist und die Werkstückauflage eine Auflagehauptebene ausbildet und senkrecht zu der Auflagehauptebene luftdurchlässig ist,
- wobei Zuluft mittels der Luftfördervorrichtung mit einer senkrecht zu der Auflagehauptebene der Werkstückauflage verlaufenden Strömungsrichtung auf eine Oberseite der Werkstückauflage richtbar ist und
- wobei mittels der Luftfördervorrichtung bearbeitungsbedingt verunreinigte Zuluft als Abluft von der Oberseite der Werkstückauflage durch die Werkstückauflage hindurch zu der von der Oberseite der Werkstückauflage abliegenden Unterseite der Werkstückauflage hin abführbar ist.

Bei der Laserbearbeitung von Werkstücken werden von der Bearbeitungsstelle des als Bearbeitungswerkzeug dienenden Laserstrahls Gase und Feststoffpartikel emittiert. Diese Emissionen können für Mensch und Material schädlich sein. Etwa bei der Laserbearbeitung von faserverstärkten Kunststoffen besteht die Gefahr einer Verunreinigung der Arbeitsumgebung mit kanzerogenen, mutagenen, reizenden und/oder geruchsintensiven Stoffen. Eine für einen Arbeitsraum einer Laserbearbeitungsvorrichtung vorgesehene Einhausung verhindert zwar während der laufenden Bearbeitung eine Ausbreitung von schädlichen Emissionen in die Umgebung der Laserbearbeitungsvorrichtung; gleichwohl kann Personal bei außerhalb der Hauptzeiten der Werkstückbearbeitung im Innern der Einhausung auszuführenden Tätigkeiten dort anstehenden Emissionen ausgesetzt sein. Von der Bearbeitungsstelle eines Laserstrahls emittierte Festkörperpartikel können aufgrund ihrer Abrasivität, ihrer elektrischen Leitfähigkeit und/oder ihres Adhäsionsverhaltens mechanische Schäden, Schäden an der Elektrik und/oder Schäden an der Steuerung der für die Werkstückbearbeitung eingesetzten maschinellen Einrichtungen verursachen.

Aufgrund der beschriebenen Verhältnisse besteht die Notwendigkeit, die mit der Laserbearbeitung von Werkstücken verbundenen Emissionen möglichst unmittelbar an dem Ort ihrer Entstehung aufzunehmen und dann in unkritische Bereiche abzuführen.

Eine gattungsgemäße Laserbearbeitungsvorrichtung, wie sie aus JP S63295090 A bekannt ist, weist zu diesem Zweck eine im Innern einer Einhausung angeordnete luftdurchlässige Werkstückauflage mit einer Absaugeinrichtung auf, mittels derer Emissionen, die bei der Laserbearbeitung von Werkstücken an der Oberseite der Werkstückauflage entstehen, durch die Werkstückauflage hindurch zu deren Unterseite hin und anschließend aus der Einhausung der Laserbearbeitungsvorrichtung abgesaugt werden.

Weiterer Stand der Technik ist offenbart in JP5500914 B2, die als nächstliegender Stand der Technik angesehen wird. Diese Druckschrift betrifft eine Vorrichtung zur Bearbeitung von Halbleiterbauteilen mittels Laser. Ein zu bearbeitendes Bauteil ist im Innern einer Laserbearbeitungskammer der Vorrichtung auf einem luftundurchlässigen horizontalen Werkstücktisch gelagert. Bei der Bearbeitung wird das Bauteil mit einem zu diesem Zweck auf das Bauteil gerichteten Laserstrahl abgescannt. Zum Abführen bearbeitungsbedingter Verunreinigungen wird die Laserbearbeitungskammer in vertikaler Richtung von Luft durchströmt. Saubere Luft wird an der Decke der Laserbearbeitungskammer an mehreren nebeneinander gelegenen und von einer gemeinsamen Zuleitung abzweigenden Eintrittsöffnungen in das Innere der Laserbearbeitungskammer aufgegeben. Am Boden der Laserbearbeitungskammer wird die nun mit Verunreinigungen befrachtete Luft an mehreren nebeneinander angeordneten und in eine gemeinsame Ableitung mündenden Austrittsöffnungen aus dem Innern der Laserbearbeitungskammer abgezogen.

Die Aufgabe der vorliegenden Erfindung besteht darin, eine Abfuhr von bearbeitungsbedingten Emissionen von der Bearbeitungsstelle eines für die Laserbearbeitung von Werkstücken eingesetzten Laserstrahls mit einer gegenüber dem gattungsgemäßen Stand der Technik erhöhten Wirksamkeit zu ermöglichen.

Erfindungsgemäß gelöst wird diese Aufgabe durch die Laserbearbeitungsvorrichtung gemäß Patentanspruch 1.

An der erfindungsgemäßen Laserbearbeitungsvorrichtung ist stromaufwärts einer eingehausten Werkstückauflage ein zu der Werkstückauflage hin von Zuluft durchströmter Zuluftkanal angeordnet und mit Einbauten versehen, aufgrund derer an einem werkstückauflagenfernen Kanaleinlass in den Zuluftkanal einströmende Luft den Zuluftkanal an einer werkstückauflagenseitigen Kanalmündung als senkrecht zu einer Auflagehauptebene der Werkstückauflage ausgerichtete laminare Zuluftströmung verlässt. Die werkstückauflagenseitige Kanalmündung des Zuluftkanals ist von der Oberseite der Werkstückauflage beabstandet und überdeckt die Werkstückauflage wenigstens teilweise, vorzugsweise vollständig. Zur Erzeugung der gewünschten Strömungsverhältnisse ist der Strömungsquerschnitt des Zuluftkanals in Teilquerschnitte geteilt und Teilquerschnittwände, welche die Teilquerschnitte begrenzen, erstrecken sich mit quer zu der Strömungsrichtung der Zuluft bestehendem gegenseitigem Wandabstand in der Strömungsrichtung. An mündungsseitigen Endlängen verlaufen die Teilquerschnittwände des Zuluftkanals parallel zueinander in der Strömungsrichtung und dabei senkrecht zu der Auflagehauptebene der Werkstückauflage. Zur Erzeugung der Zu- und der Abluftströmung kann beispielsweise ein mittels einer herkömmlichen Vakuumpumpe erzeugter Unterdruck an den Arbeitsraum im Innern der Einhausung der erfindungsgemäßen Laserbearbeitungsvorrichtung angelegt werden.

Die laminare Zuluftströmung, die mittels des erfindungsgemäß vorgesehenen und als Gleichrichter fungierenden Zuluftkanals erzeugt wird, verteilt sich homogen über die Oberfläche der Werkstückauflage und ist folglich in der Lage, Emissionen, die an der Werkstückoberfläche bearbeitungsbedingt erzeugt werden, wirksam zu erfassen. Der laminare Strömungscharakter bleibt ungeachtet der Aufnahme der bearbeitungsbedingten Emissionen erhalten. Aufgrund ihres laminaren und folglich verwirbelungsfreien Charakters kann die mit den aufgenommenen Emissionen befrachtete Zuluftströmung als Abluftströmung auf kürzestem Wege von der Oberseite der Werkstückauflage zu der Unterseite der Werkstückauflage gelangen. Eine undefinierte Verteilung von mit Emissionen befrachteter Abluft im Innern der Einhausung wird vermieden.

Erfindungsgemäß ist vorzugsweise vorgesehen, dass die Abluft die Einhausung der Laserbearbeitungsvorrichtung verlässt. In jedem Fall besteht die Möglichkeit, die Abluft einer Aufbereitungseinheit, beispielsweise einem Abluftfilter, zuzuführen.

Besondere Ausführungsarten der Laserbearbeitungsvorrichtung gemäß Patentanspruch 1 ergeben sich aus den abhängigen Patentansprüchen 2 bis 19.

Zur Erzeugung von für die Abfuhr von Emissionen optimalen laminaren Strömungsverhältnissen sind an der erfindungsgemäßen Laserbearbeitungsvorrichtung besondere technische Vorkehrungen einzeln oder in Kombination miteinander getroffen.

In Weiterbildung der Erfindung kann der Zuluftkanal über eine sich ausgehend von dem Kanaleinlass des Zuluftkanals in der Strömungsrichtung der Zuluft erstreckende und als Einlauflänge vorgesehene Teillänge einen ungeteilten Strömungsquerschnitt aufweisen (Patentanspruch 2) und/oder können die gegenseitigen Wandabstände der Teilquerschnittwände des Zuluftkanals an den mündungsseitigen Endlängen der Teilquerschnittwände einheitlich bemessen sein (Patentanspruch 3) und/oder können die gegenseitigen Wandabstände der Teilquerschnittwände des Zuluftkanals an zu dem Kanaleinlass des Zuluftkanals hin liegenden einlassseitigen Enden der Teilquerschnittwände insbesondere zur Berücksichtigung von über den Strömungsquerschnitt des Zuluftkanals auftretenden Änderungen der Strömungsgeschwindigkeit der Zuluft uneinheitlich bemessen sein (Patentanspruch 4) und/oder können zu dem Kanaleinlass des Zuluftkanals hin liegende einlassseitige Enden der Teilquerschnittwände und/oder zu der Kanalmündung des Zuluftkanals hin liegende mündungsseitige Enden der Teilquerschnittwände in der Strömungsrichtung der Zuluft gegeneinander versetzt sein (Patentanspruch 5) und/oder kann der Zuluftkanal stromaufwärts der Teilquerschnittwände mit einer von der Zuluft in der Strömungsrichtung passierten und beispielsweise zur Einstellung eines Druckverlustes dienenden Blende versehen sein (Patentanspruch 6).

Insbesondere zur Abstimmung auf konkrete räumliche Gegebenheiten ist in weiterer Ausgestaltung der Erfindung vorgesehen, dass sich die Strömungsrichtung der Zuluft zwischen dem Kanaleinlass des Zuluftkanals und der Kanalmündung des Zuluftkanals ändert, indem die Teilquerschnittwände des Zuluftkanals Leitflächen für die zu der Werkstückauflage hin strömende Zuluft ausbilden, wobei die zu der Werkstückauflage hin strömende Zuluft mittels der Teilquerschnittwände vorzugsweise rechtwinklig aus der Strömungsrichtung an dem Kanaleinlass in die Strömungsrichtung an der Kanalmündung lenkbar ist (Patentanspruch 7). Vorzugsweise verlaufen an der erfindungsgemäßen Laserbearbeitungsvorrichtung die Teilquerschnittwände des Zuluftkanals über eine einlassseitige Teillänge in horizontaler Richtung und über eine sich in der Strömungsrichtung der Zuluft an die einlassseitige Teillänge anschließende mündungsseitige Teillänge in vertikaler Richtung und dabei nach unten hin in Richtung auf die mit der laminaren Zuluftströmung zu beaufschlagende Werkstückauflage.

In bevorzugter Ausgestaltung der erfindungsgemäßen Laserbearbeitungsvorrichtung ist ausweislich Patentanspruch 8 für den Arbeitsraum eine im Innern der Einhausung angeordnete und sich senkrecht zu der Auflagehauptebene der Werkstückauflage erstreckende Abtrennung vorgesehen, die zu der werkstückauflagenseitigen Kanalmündung des Zuluftkanals hin offen ist und den Arbeitsraum gegen einen im Innern der Einhausung der Laserbearbeitungsvorrichtung ausgebildeten Restraum abgrenzt. Durch die Abtrennung des Arbeitsraums wird die Ausbreitung von bearbeitungsbedingten Emissionen im Innern der Einhausung räumlich eingeschränkt. Der mit der laminaren Zuluftströmung zu beherrsehende Bereich im Innern der Einhausung kann auf den unmittelbaren Nahbereich der Werkstückauflage begrenzt werden. Der für die Abfuhr von Emissionen aus dem Innern der Einhausung benötigte Volumenstrom an Zuluft lässt sich auf diese Art und Weise minimieren.

In weiterer bevorzugter Ausgestaltung der erfindungsgemäßen Laserbearbeitungsvorrichtung wird zur Abgrenzung des Arbeitsraums gegen den Restraum der Einfachheit halber ein im Innern der Einhausung seitlich neben der Werkstückauflage angeordneter Maschinenkörper einer Laserbearbeitungsmaschine der Laserbearbeitungsvorrichtung genutzt (Patentanspruch 9).

Eine besonders wirksame Abfuhr von Emissionen ist im Falle einer weiteren Bauart der mit einer separaten Abtrennung für den Arbeitsraum versehenen erfindungsgemäßen Laserbearbeitungsvorrichtung dadurch sichergestellt, dass die werkstückauflagenseitige Kanalmündung des Zuluftkanals einen innerhalb der Abtrennung parallel zu der Auflagehauptebene der Werkstückauflage ausgebildeten Querschnitt des Arbeitsraums vorzugsweise vollständig überdeckt (Patentanspruch 10). Aufgrund dieses Erfindungsmerkmals ist gewährleistet, dass die aus dem Zuluftkanal zu der Werkstückauflage hin austretende Zuluftströmung die bei der Werkstückbearbeitung erzeugten Emissionen vollständig erfasst.

Durch eine gute Zugänglichkeit des abgetrennten Arbeitsbereichs im Innern der Einhausung zeichnet sich die erfindungsgemäße Laserbearbeitungsvorrichtung gemäß Patentanspruch 11 aus, im Falle derer die Abtrennung des Arbeitsraums zu einer seitlich neben der Werkstückauflage vorgesehenen Zugangsseite der Werkstückauflage hin offen ist und die Einhausung der Laserbearbeitungsvorrichtung an der Zugangsseite der Werkstückauflage eine zugangsseitige Wand mit einer verschließbaren Zugangsöffnung aufweist.

In weiterer bevorzugter Ausgestaltung der erfindungsgemäßen Laserbearbeitungsvorrichtung ist vorgesehen, dass ein Teil der werkstückauflagenseitigen Kanalmündung des Zuluftkanals in der senkrechten Projektion auf die Auflagehauptebene der Werkstückauflage gegenüber der Werkstückauflage mit einem Überstand parallel zu der Auflagehauptebene der Werkstückauflage vorsteht und dass Zuluft, welche an dem Überstand der werkstückauflagenseitige Kanalmündung des Zuluftkanals in der Strömungsrichtung austritt, mittels einer seitlich neben der Werkstückauflage angeordneten Leitfläche in Richtung auf die Oberseite der Werkstückauflage lenkbar ist (Patentanspruch 12). Aufgrund des Überstandes der Mündung des Zuluftkanals gegenüber der Werkstückauflage besteht die Möglichkeit, Zuluft auch in einen Bereich seitlich neben der Werkstückauflage aufzugeben und dadurch diesen Bereich von bearbeitungsbedingten Emissionen freizuhalten. Die Leitfläche lenkt die gegebenenfalls mit Emissionen befrachtetet Zuluft als Abluft aus dem Bereich seitlich neben der Werkstückauflage zu der Oberseite der Werkstückauflage hin, von wo aus die aus dem seitlichen Bereich stammende Abluft gemeinsam mit der unmittelbar auf die Oberseite der Werkstückoberfläche aufgegebenen und mit Emissionen befrachteten Zuluft abgeführt werden kann.

In Weiterbildung der Erfindung steht gemäß Patentanspruch 13 der Überstand der werkstückauflagenseitigen Kanalmündung des Zuluftkanals gegenüber der Werkstückauflage zu einer seitlich neben der Werkstückauflage vorgesehenen Zugangsseite der Werkstückauflage hin vor. Die Leitfläche, welche an dem Überstand der werkstückauflagenseitige Kanalmündung des Zuluftkanals in der Strömungsrichtung austretende Zuluft in Richtung auf die Oberseite der Werkstückauflage lenkt, ist dabei an der Zugangsseite der Werkstückauflage, vorzugsweise an einer zugangsseitigen Wand der Einhausung der Laserbearbeitungsvorrichtung, vorgesehen. Auf diese Art und Weise wird derjenige Bereich im Innern der Einhausung, der von Personal während der Nebenzeiten der Werkstückbearbeitung, beispielsweise zum Be- und Entladen der Werkstückauflage, als erstes betreten wird, wirksam von Emissionen freigehalten. Die Leitfläche an der zugangsseitigen Wand der Einhausung kann eine Abrisskante ausbilden, mittels derer die aus dem Zuluftkanal an dessen seitlichem Überstand austretende Zuluft von der zugangsseitigen Wand der Einhausung abgelöst wird.

In weiterer bevorzugter Ausgestaltung der erfindungsgemäßen Laserbearbeitungsvorrichtung ist ausweislich Patentanspruch 14 zusätzlich zu einem zu der Oberseite der Werkstückauflage hin mündenden oberen Zuluftkanal ein unterer Zuluftkanal vorgesehen, durch welchen sekundäre Zuluft mittels einer Luftfördervorrichtung als sekundäre Zuluftströmung mit einer parallel zu der Auflagehauptebene der Werkstückauflage verlaufenden anfänglichen Strömungsrichtung auf eine seitlich neben der Werkstückauflage angeordnete untere Leitfläche richtbar ist, mittels derer die sekundäre Zuluftströmung aus der anfänglichen Strömungsrichtung in eine senkrecht zu der Auflagehauptebene der Werkstückauflage zu der Oberseite der Werkstückauflage hin verlaufende Strömungsrichtung lenkbar ist. Mittels der aus dem unteren Zuluftkanal stammenden sekundären Zuluft werden Bereiche seitlich neben der Werkstückauflage von der Unterseite der Werkstückauflage her von bearbeitungsbedingten Emissionen freigehalten. Vorzugsweise wird die sich in eine senkrecht zu der Auflagehauptebene der Werkstückauflage bewegende sekundäre Zuluftströmung ein weiteres Mal mittels einer Leitfläche abgelenkt und dabei zu der Oberseite der Werkstückauflage hin gerichtet, wo sie sich mit der aus dem oberen Zuluftkanal stammenden Zuluftströmung zur Abfuhr von Emissionen von der Oberseite der Werkstückauflage vereinigen kann.

Der Einfachheit halber ist in weiterer Ausgestaltung der Erfindung die untere Leitfläche für die sekundäre Zuluftströmung an der Einhausung der Laserbearbeitungsvorrichtung vorgesehen, vorzugsweise von der Einhausung der Laserbearbeitungsvorrichtung ausgebildet (Patentanspruch 15).

Im Falle der Erfindungsbauart gemäß Patentanspruch 16 wird der untere Zuluftkanal vorteilhafterweise dazu genutzt, die Zugangsseite der Werkstückauflage und somit den von Personal vorrangig betretenen Bereich im Innern der Einhausung der Laserbearbeitungsvorrichtung von Emissionen freizuhalten. Vorzugsweise sind die Erfindungsmerkmale von Patentanspruch 16 gemeinschaftlich mit den Erfindungsmerkmalen von Patentanspruch 12 realisiert. An der sich damit ergebenden Laserbearbeitungsvorrichtung wird der Zugangsbereich der Werkstückauflage im Innern der Einhausung besonders wirksam emissionsfrei gehalten.

Ausweislich Patentanspruch 17 ist in weiterer bevorzugter Ausgestaltung der erfindungsgemäßen Laserbearbeitungsvorrichtung auch der untere Zuluftkanal zur Erzeugung einer laminaren Zuluftströmung ausgebildet. Die zu diesem Zweck vorgesehenen Erfindungsmerkmale entsprechen den an dem oberen Zuluftkanal getroffenen und vorstehend im Einzelnen erläuterten Maßnahmen.

Besondere technische Vorkehrungen, die an der erfindungsgemäßen Laserbearbeitungsvorrichtung zur Optimierung der mittels des unteren Zuluftkanals erzeugten sekundären Zuluftströmung einzeln oder in Kombination miteinander vorgesehen sein können und die vorstehend erläuterten Erfindungsmerkmalen des oberen Zuluftkanals entsprechen, sind in Patentanspruch 18 angegeben.

Patentanspruch 19 betrifft eine Bauart der erfindungsgemäßen Laserbearbeitungsvorrichtung, im Falle derer zur Erzeugung der laminaren Zuluftströmung an der Oberseite der Werkstückauflage und/oder zur Erzeugung der sekundären Zuluftströmung an der Unterseite der Werkstückauflage jeweils mehrere Zuluftkanäle der vorstehenden Art vorgesehen sind. Vorzugsweise ist die erfindungsgemäße Laserbearbeitungsvorrichtung dabei mit zwei oberen und zwei unteren Zuluftkanälen versehen, wobei die beiden oberen Zuluftkanäle ebenso wie die beiden unteren Zuluftkanäle bezüglich einer senkrecht zu der Auflagehauptebene der Werkstückauflage verlaufenden Ebene symmetrisch angeordnet sind und wobei jeder der Zuluftkanäle Teilquerschnittwände mit einer parallel zu der Auflagehauptebene der Werkstückauflage in horizontaler Richtung verlaufenden einlassseitigen Teillänge aufweist. An den oberen Zuluftkanälen schließt sich in der Strömungsrichtung der Zuluft an die horizontalen einlassseitigen Teillängen der Teilquerschnittwände mündungsseitige Teillängen der Teilquerschnittwände an, die senkrecht zu der Auflagehauptebene der Werkstückauflage nach unten in Richtung auf die mit der laminaren Zuluftströmung zu beaufschlagende Werkstückauflage verlaufen. Mündungsseitige Teillängen der Teilquerschnittwände der unteren Zuluftkanäle verlaufen senkrecht zu den zugehörigen einlassseitigen Teillängen und dabei ebenso wie die einlassseitigen Teillängen parallel zu der Auflagehauptebene der Werkstückauflage.

Nachfolgend wird die Erfindung anhand beispielhafter schematischer Darstellungen näher erläutert. Es zeigen:
- Figur 1: eine perspektivische Darstellung einer Laserbearbeitungsvorrichtung mit einer Einhausung,
- Figur 2: die Zugangsseite der Laserbearbeitungsvorrichtung gemäß Figur 1 in der senkrechten Ansicht,
- Figur 3: eine senkrechte Ansicht der Laserbearbeitungsvorrichtung gemäß Figur 1 in Richtung des Pfeils III in Figur 1,
- Figur 4: eine perspektivische Schnittdarstellung der Laserbearbeitungsvorrichtung gemäß Figur 1 mit einer durch die Linie IV-IV in Figur 3 angedeuteten Schnittebene,
- Figur 5: eine Schnittdarstellung der Laserbearbeitungsvorrichtung gemäß Figur 1 mit einer durch die Linie V-V in Figur 2 angedeuteten Schnittebene,
- Figur 6: eine perspektivische Schnittdarstellung einer dachseitigen Baugruppe der Laserbearbeitungsvorrichtung gemäß Figur 1 mit zwei oberen Zuluftkanälen,
- Figur 7: eine senkrechte Ansicht der oberen Zuluftkanäle der dachseitigen Baugruppe gemäß Figur 6,
- Figur 8: eine perspektivische Darstellung eines der oberen Zuluftkanäle der dachseitigen Baugruppe gemäß Figur 6,
- Figur 9: eine perspektivische Schnittdarstellung einer bodenseitigen Baugruppe der Laserbearbeitungsvorrichtung gemäß Figur 1 mit zwei unteren Zuluftkanälen,
- Figur 10: eine perspektivische Darstellung eines der unteren Zuluftkanäle der bodenseitigen Baugruppe gemäß Figur 9,
- Figur 11: eine senkrechte Ansicht des unteren Zuluftkanals gemäß Figur 10 in Richtung des Pfeils XI in Figur 10 und
- Figur 12: eine Schnittdarstellung des unteren Zuluftkanals gemäß den Figuren 10 und 11 mit einer durch die Linie XII-XII in Figur 11 angedeuteten Schnittebene.

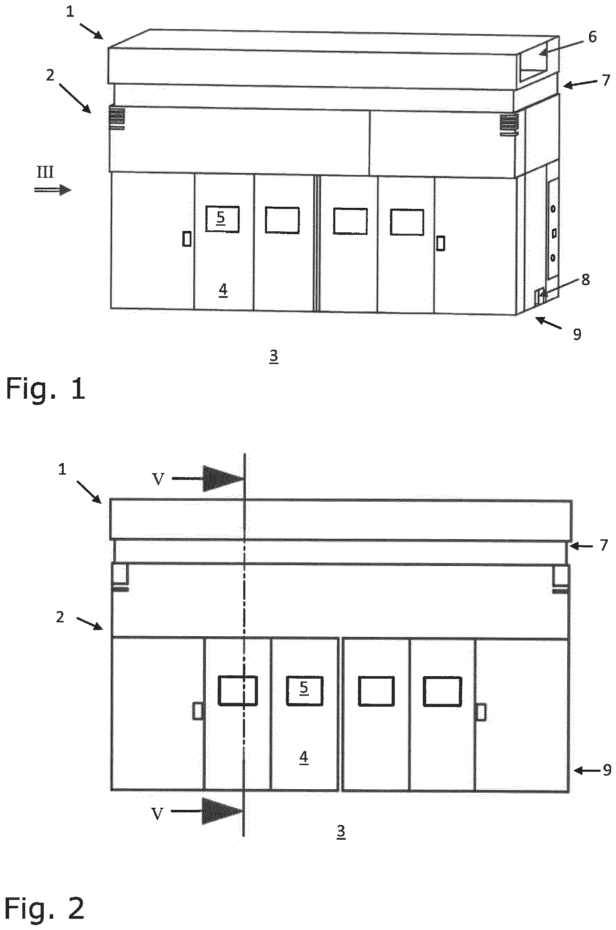

Gemäß den Figuren 1 und 2 weist eine Laserbearbeitungsvorrichtung 1 eine Einhausung 2 auf. An einer Zugangsseite 3 der Einhausung 2 sind insgesamt vier Zugangstüren 4 mit jeweils einem Sichtfenster 5 vorgesehen. In Figur 1 zu erkennen sind außerdem ein erster Zuluftkanal 6, der als Teil einer dachseitigen Baugruppe 7 einen ersten oberen Zuluftkanal bildet sowie ein erster unterer Zuluftkanal 8, der als Teil einer bodenseitigen Baugruppe 9 der Laserbearbeitungsvorrichtung 1 vorgesehen ist.

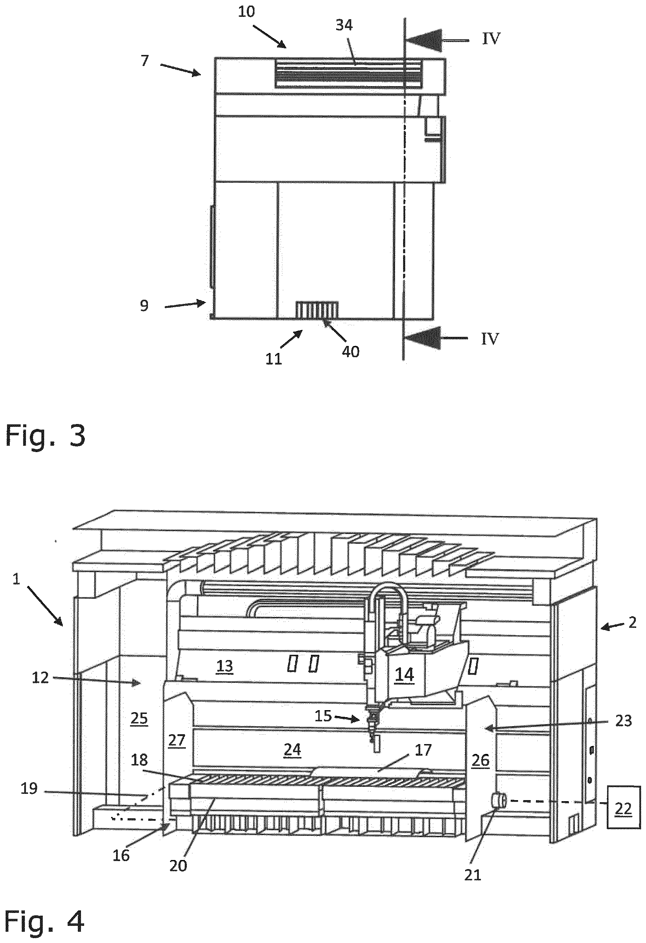

Figur 3 zeigt die von dem Betrachter von Figur 1 abliegende Seite der Laserbearbeitungsvorrichtung 1. Gemäß Figur 3 weist die dachseitige Baugruppe 7 der Laserbearbeitungsvorrichtung 1 zusätzlich zu dem in Figur 1 andeutungsweise erkennbaren ersten (oberen) Zuluftkanal 6 einen zweiten (oberen) Zuluftkanal 10 auf. Die bodenseitige Baugruppe 9 der Laserbearbeitungsvorrichtung 1 ist ausweislich Figur 3 zusätzlich zu dem ersten unteren Zuluftkanal 8 mit einem zweiten unteren Zuluftkanal 11 versehen.

In Figur 4 ist der Blick in das Innere der Einhausung 2 freigegeben.

Im Innern der Einhausung 2 befindet sich demnach eine in dem dargestellten Beispielsfall als Laserschneidmaschine 12 herkömmlicher Bauart ausgeführte Laserbearbeitungsmaschine. Die Laserschneidmaschine 12 weist einen Maschinenkörper 13 sowie einen längs des Maschinenkörpers 13 verfahrbaren Ausleger 14 auf, an dessen von dem Maschinenkörper 13 abliegenden Ende als Laserbearbeitungseinheit ein Laserschneidkopf 15 angebracht ist. Der Laserschneidkopf 15 ist in üblicher Weise längs des Auslegers 14 horizontal verfahrbar und in vertikaler Richtung zustellbar.

Vor dem Maschinenkörper 13 der Laserschneidmaschine 12 ist im Innern der Einhausung 2 eine herkömmliche Werkstückauflage 16 angeordnet. In Figur 4 lagert die Werkstückauflage 16 an ihrer Oberseite ein mittels der Laserschneidmaschine 12 zu bearbeitendes dreidimensionales Werkstück 17. Zu diesem Zweck weist die Werkstückauflage 16 Auflageleisten 18 auf, die mit gegenseitigem Abstand parallel zueinander verlaufen und eine in Figur 4 strichpunktiert angedeutete Auflagehauptebene 19 ausbilden.

Aufgrund des gegenseitigen Abstandes der Auflageleisten 18 ist die Werkstückauflage 16 senkrecht zu der Auflagehauptebene 19 luftdurchlässig. In einem kastenartigen Unterbau 20 der Werkstückauflage 16 befinden sich in Figur 4 verdeckt angeordnete Absaugöffnungen, die an eine in Figur 4 teilweise dargestellte Absaugleitung 21 angeschlossen sind. Mit einem in Figur 4 gestrichelt angedeuteten Teilstück verläuft die Absaugleitung 21 durch eine seitliche Öffnung der Einhausung 2 zu einer in Figur 4 gleichfalls nur angedeuteten und als Luftfördervorrichtung dienenden Vakuumpumpe 22.

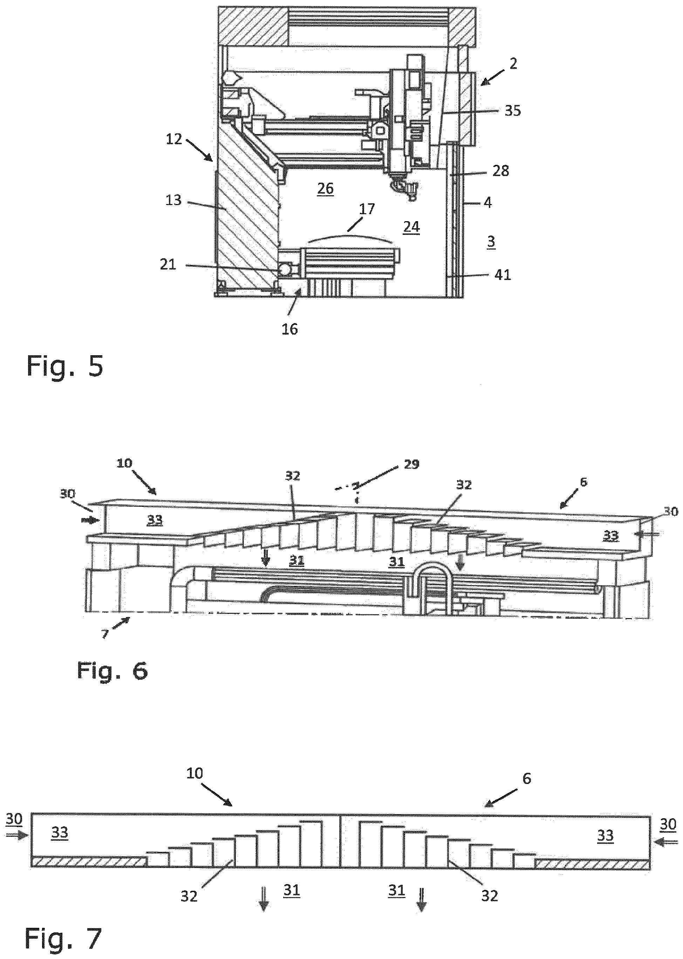

Durch eine Abtrennung 23 wird der Innenraum der Einhausung 2 in einen innerhalb der Abtrennung 23 liegenden Arbeitsraum 24 und einen außerhalb der Abtrennung 23 angeordneten Restraum 25 unterteilt. Der zu der Rückseite der Einhausung 2 hin gelegene Teil der Abtrennung 23 wird durch den Maschinenkörper 13 der Laserschneidmaschine 12 gebildet. Als Seitenteile der Abtrennung 23 sind seitliche Wandbleche 26, 27 vorgesehen. Ausweislich Figur 5 reicht das seitliche Wandblech 26 von dem Maschinenkörper 13 der Laserschneidmaschine 12 bis zu einer zugangsseitigen Wand 28 der Einhausung 2. Entsprechend ist das seitliche Wandblech 27 der Abtrennung 23 bemessen. Die zugangsseitige Wand 28 der Einhausung 2 ist mit Zugangsöffnungen versehen, die mittels der in den Figuren 1 und 2 dargestellten Zugangstüren 4 verschlossen werden können.

Die Zugangsseite 3 der Einhausung 2 ist gleichzeitig die Zugangsseite der Werkstückauflage 16. An der Zugangsseite 3 der Einhausung 2 und der Werkstückauflage 16 wird der Arbeitsraum 24 durch die zugangsseitige Wand 28 der Einhausung 2 begrenzt. Bei geöffneten Zugangstüren 4 ist der Arbeitsraum 24 von der Zugangsseite 3 her zugänglich.

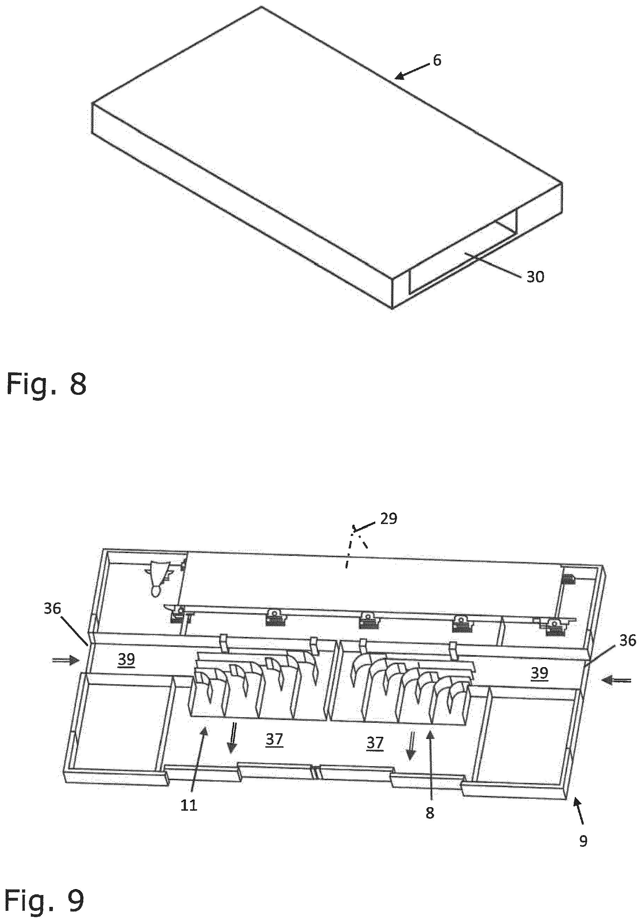

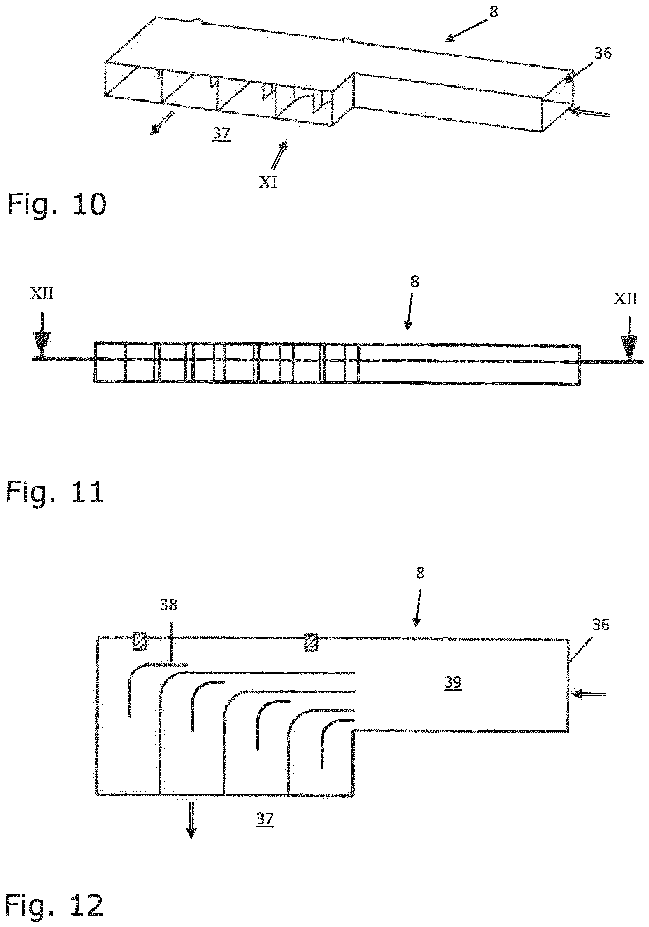

Bei der Laserbearbeitung von auf der Werkstückauflage 16 abgelegten Werkstücken, beispielsweise beim Laserschneiden des dreidimensionalen Werkstücks 17 mittels des Laserschneidkopfs 5 der Laserschneidmaschine 12, werden von der Bearbeitungsstelle des Laserbearbeitungsstrahls insbesondere Gase und Feststoffpartikel emittiert. Diese Emissionen können für Mensch und Material schädlich sein und müssen daher aus dem Arbeitsraum 24 möglichst umfassend abgeführt werden. Zu diesem Zweck weist die Laserbearbeitungsvorrichtung 1 die beiden (oberen) Zuluftkanäle 6, 10 der dachseitigen Baugruppe 7 und die beiden unteren Zuluftkanäle 8, 11 der bodenseitigen Baugruppe 9 auf. Der Arbeitsraum 24 ist dementsprechend als nach oben permanent offene und an einer Seite öffen- und schließbare Flowbox ausgebildet. Die (oberen) Zuluftkanäle 6, 10 sind im Einzelnen in den Figuren 6 bis 8 dargestellt. Konstruktive Einzelheiten der unteren Zuluftkanäle 8, 11 ergeben sich aus den Figuren 9 bis 12.

Ebenso wie die beiden (oberen) Zuluftkanäle 6, 10 sind auch die beiden unteren Zuluftkanäle 8, 11 bezüglich einer senkrecht zu der Auflagehauptebene 19 der Werkstückauflage 16 verlaufenden und in den Figuren 6 und 9 strichpunktiert angedeuteten Ebene 29 symmetrisch angeordnet. Durch die (oberen) Zuluftkanäle 6, 10 und durch die unteren Zuluftkanäle 8, 11 wird dem Arbeitsraum 24 der Laserbearbeitungsvorrichtung 1 aufgrund eines bei Betrieb der Vakuumpumpe 22 an dem Arbeitsraum 24 anliegenden Unterdrucks Zuluft zugeführt. Die Zuluftströmungen an den (oberen) Zuluftkanälen 6, 10 und an den unteren Zuluftkanälen 8, 11 sind in den Figuren 6, 7 und 9, 10 durch Pfeile angedeutet.

Unter der Wirkung des mittels der Vakuumpumpe 22 erzeugten Unterdrucks verlässt die mit Emissionen befrachtete Zuluft den Arbeitsraum 24 als Abluft durch die Werkstückauflage 16 hindurch über die Absaugleitung 21.

Jeder der (oberen) Zuluftkanäle 6, 10 weist einen werkstückauflagenfernen Kanaleinlass 30 und eine werkstückauflagenseitige Kanalmündung 31 auf. Die stromaufwärts der Werkstückauflage 16 gelegenen Kanalmündungen 31 der (oberen) Zuluftkanäle 6, 11 sind von der Oberseite der Werkstückauflage 16 beabstandet und dabei auch oberhalb der Laserschneidmaschine 12 der Laserbearbeitungsvorrichtung 1 angeordnet.

Der Strömungsquerschnitt der (oberen) Zuluftkanäle 6, 10 wird über eine Teillänge der (oberen) Zuluftkanäle 6, 10 durch Teilquerschnittwände 32 in Teilquerschnitte geteilt. Die Teilquerschnittwände 32 sind in dem dargestellten Beispielsfall rechtwinklig und bilden entsprechend verlaufende Leitflächen für die mittels der Vakuumpumpe 22 geförderte Zuluft aus. Die optimale Geometrie der Teilquerschnittwände ist auch von dem Zuluftvolumen und dem zur Verfügung stehenden Bauraum abhängig, alternativ sind auch z.B. abgerundet verlaufende Teilquerschnittwände möglich. Über eine weitere, sich ausgehend von dem Kanaleinlass 30 in der Strömungsrichtung der Zuluft erstreckende und als Einlauflänge vorgesehene Teillänge 33 besitzen die (oberen) Zuluftkanäle 6, 10 einen ungeteilten Strömungsquerschnitt. In der Teillänge 33 mit ungeteiltem Strömungsquerschnitt kann sich die in die (oberen) Zuluftkanäle 6, 10 einströmende Zuluft bereits laminar ausprägen.

Mit ihren vertikalen mündungsseitigen Endlängen verlaufen die Teilquerschnittwände 32 parallel zueinander und dabei senkrecht zu der Auflagehauptebene 19 der Werkstückauflage 16. Die gegenseitigen Wandabstände der Teilquerschnittwände 32 der (oberen) Zuluftkanäle 6, 10 sind an den mündungsseitigen Endlängen der Teilquerschnittwände 32 einheitlich und an zu dem Kanaleinlass 30 hin liegenden einlassseitigen Enden der Teilquerschnittwände 32 uneinheitlich bemessen. Außerdem sind die Teilquerschnittwände 32 an zu dem Kanaleinlass 30 hin liegenden einlassseitigen Enden in der Strömungsrichtung der Zuluft gegeneinander versetzt, während die mündungsseitigen Enden der Teilquerschnittwände 32 an der Kanalmündung 31 in einer gemeinsamen, parallel zu der Auflagehauptebene 19 der Werkstückauflage 16 verlaufenden Ebene liegen.

Bei Bedarf kann in den Kanaleinlass 30 der (oberen) Zuluftkanäle 6, 10 eine gitterartige Blende 34 eingesetzt werden, wie sie in Figur 3 an dem Kanaleinlass 30 des (oberen) Zuluftkanals 10 dargestellt ist.

Aufgrund der beschriebenen Konfiguration der (oberen) Zuluftkanäle 6, 10 erzeugen letztere eine laminare Zuluftströmung, die ausgehend von den Kanalmündungen 31 der (oberen) Zuluftkanäle 6, 10 mit einer senkrecht zu der Auflagehauptebene 19 der Werkstückauflage 16 verlaufenden Strömungsrichtung in den Abbildungen nach unten gerichtet ist.

Gemeinschaftlich überdecken die Kanalmündungen 31 der beiden (oberen) Zuluftkanäle 6, 10 den Querschnitt des durch die Abtrennung 23 begrenzten Arbeitsraums 24 der Laserbearbeitungsvorrichtung 1 vollständig. Ausweislich Figur 5 steht ein Teil der Kanalmündungen 31 der (oberen) Zuluftkanäle 6, 10 in der senkrechten Projektion auf die Auflagehauptebene 19 der Werkstückauflage 16 gegenüber der Werkstückauflage 16 mit einem Überstand gegenüber der Werkstückauflage 16 vor.

Zuluft, die an dem über der Werkstückauflage 16 angeordneten Bereich der Kanalmündungen 31 der (oberen) Zuluftkanäle 6, 10 austritt, gelangt als laminare Zuluftströmung auf die Oberseite der Werkstückauflage 16, wobei sich die Zuluftströmung aufgrund ihres laminaren Charakters homogen über die Oberseite der Werkstückauflage 16 verteilt. Im Bereich des Überstandes der Kanalmündungen 31 der (oberen) Zuluftkanäle 6, 10 austretende Zuluft wird durch ein an der Zugangsseite 3 neben der Werkstückauflage 16 angeordnetes und eine Leitfläche ausbildendes Leitblech 35 (Figur 5) in Richtung auf die Oberseite der Werkstückauflage 16 gelenkt.

An der Unterseite der Werkstückauflage 16 wird durch die unteren Zuluftkanäle 8, 11 sekundäre Zuluft als sekundäre Zuluftströmung mit einer parallel zu der Auflagehauptebene 19 der Werkstückauflage 16 verlaufenden anfänglichen Strömungsrichtung in den Arbeitsraum 24 der Laserbearbeitungsvorrichtung 1 aufgegeben. Auch die sekundäre Zuluft wird durch den mittels der Vakuumpumpe 22 an den Arbeitsraum 24 angelegten Unterdruck gefördert.

Jeder der unteren Zuluftkanäle 8, 11 weist einen Kanaleinlass 36 und eine Kanalmündung 37 auf. Die beiden Kanalmündungen 37 der unteren Zuluftkanäle 8, 11 erstrecken sich über die gesamte Breite der Werkstückauflage 16 beziehungsweise des Arbeitsraums 24.

Teilquerschnittwände 38 teilen den Strömungsquerschnitt der unteren Zuluftkanäle 8, 11 über eine Teillänge der unteren Zuluftkanäle 8, 11 in Teilquerschnitte und bilden Leitflächen für die von dem Kanaleinlass 36 zu der Kanalmündung 37 strömende Zuluft aus. Mittels der Teilquerschnittwände 38 wird die Zuluftströmung unter einem rechten Winkel abgelenkt.

Ausgehend von dem Kanaleinlass 36 weisen die unteren Zuluftkanäle 8, 11 zur laminaren Ausprägung der in die unteren Zuluftkanäle 8, 11 einströmenden sekundären Zuluft eine in der Strömungsrichtung der sekundären Zuluft verlaufende und als Einlauflänge vorgesehene Teillänge 39 mit einem ungeteilten Strömungsquerschnitt auf. Die gegenseitigen Wandabstände der Teilquerschnittwände 38 sind an den zu dem Kanaleinlass 36 liegenden Teillängen der Teilquerschnittwände 38 uneinheitlich, an den zu der Kanalmündung 37 hin liegenden Teillängen der Teilquerschnittwände 38 einheitlich bemessen. Die einlassseitigen Enden der Teilquerschnittwände 38 liegen in einer gemeinsamen, senkrecht zu der Strömungsrichtung der sekundären Zuluft verlaufenden Ebene. Mündungsseitige Enden der Teilquerschnittwände 38 sind in der Strömungsrichtung der sekundären Zuluft gegeneinander versetzt.

Sofern die Strömungsverhältnisse dies erfordern, kann der Kanaleinlass 36 der unteren Zuluftkanäle 8, 11 mit einer gitterartigen Blende 40 versehen werden. Eine gitterartige Blende 40 an dem Kanaleinlass 36 des unteren Zuluftkanals 11 ist in Figur 3 dargestellt.

Die an den Kanalmündungen 37 aus den unteren Zuluftkanälen 8, 11 parallel zu der Auflagehauptebene 19 der Werkstückauflage 16 als laminare sekundäre Zuluftströmung austretende sekundäre Zuluft gelangt auf eine untere Leitfläche 41, die von der zugangsseitigen Wand 28 der Einhausung 2 der Laserbearbeitungsvorrichtung 1 gebildet wird (Figur 5). Durch die untere Leitfläche 41 wird die anfänglich horizontale sekundäre Zuluftströmung vertikal nach oben gelenkt. Dort trifft die sekundäre Zuluftströmung auf die aus den beiden (oberen) Zuluftkanälen 6, 10 stammende und mittels des Leitblechs 35 in Richtung auf die Oberseite der Werkstückauflage 16 gelenkte Zuluftströmung. Die obere Zuluftströmung und die untere Zuluftströmung bewegen sich als vereinigte Zuluftströmung zu der Oberseite der Werkstückauflage 16, wo sie gemeinsam mit der aus den (oberen) Zuluftkanälen 6, 10 senkrecht auf die Werkstückauflage 16 gerichteten Zuluftströmung bearbeitungsbedingte Emissionen unmittelbar am Ort ihrer Entstehung aufnimmt. Mittels der Vakuumpumpe 22 wird die mit Emissionen befrachtete Zuluft als Abluft auf kürzestem Wege durch die Werkstückauflage 16 abgesaugt.

Die durch die (oberen) Zuluftkanäle 6, 10 in das Innere der Einhausung 2 der Laserbearbeitungsvorrichtung 1 aufgegebene Zuluftströmung ist als Hauptströmung vorgesehen, die dem Inneren der Einhausung 2 über die unteren Zuluftkanäle 8, 11 zugeführte sekundäre Zuluftströmung als Nebenströmung. Die Volumenströme der Haupt- und der Nebenströmung sind aufeinander abgestimmt. In der Praxis hat sich ein Volumenstromverhältnis Hauptströmung : Nebenströmung von 86% : 14% bewährt. Das optimale Verhältnis ist jedoch von geometrischen Einflussgrößen der Einhausung 2 abhängig, insbesondere der Größe des Arbeitsraumes 24 aber auch z.B. dem Abstand der unteren Leitfläche 41 von der Werkstückauflage 16. Ein vorteilhaftes Volumenstromverhältnis im Sinne der Erfindung wird in aller Regel eine höhere Hauptströmung als Nebenströmung haben. Es wird davon ausgegangen, dass ein optimales Verhältnis im Bereich von 95:5 bis 75:25 liegt. Das optimale Volumenstromverhältnis kann auch von Größe und Geometrie des Werkstücks 17 abhängig sein. Einstellbar ist das Volumenstromverhältnis beispielsweise über Druckverluste, die mittels der gitterartigen Blenden 34 an den (oberen) Zuluftkanälen 6, 10 und mittels der gitterartigen Blenden 40 an den (unteren) Zuluftkanälen 8, 11 erzeugt werden können.

Zusätzlich zur Vakuumpumpe 22 können an den Zuluftkanälen 6, 8, 10, 11 Gebläse zur Zuluftförderung vorgesehen sein, durch solche kann ebenfalls eine Einstellung des Volumenstromverhältnisses ermöglicht sein.

Aufgrund der mittels der (oberen) Zuluftkanäle 6, 10 und der unteren Zuluftkanäle 8, 11 erzeugten Strömungsverhältnisse im Innern der Einhausung 2 werden bearbeitungsbedingte Emissionen in dem Arbeitsraum 24 der Laserbearbeitungsvorrichtung 1 zumindest annähernd vollständig erfasst und auf kürzestem Wege aus dem Arbeitsraum 24 abgeführt. Der an der Zugangsseite 3 der Einhausung 2 und der Werkstückauflage 16 gelegene Bereich des Arbeitsraums 24 wird von Zuluft intensiv durchströmt und dadurch von bearbeitungsbedingten Emissionen freigehalten. Personal, das in Nebenzeiten der Laserbearbeitung den Arbeitsraum 24 beispielsweise zum Be- und Entladen der Werkstückauflage 16 oder zur Durchführung von Wartungs- und Reparaturarbeiten betritt, ist folglich keinen bearbeitungsbedingten Emissionen ausgesetzt.

## Patentansprüche

1. Laserbearbeitungsvorrichtung zum Bearbeiten von Werkstücken (17) mittels Laser, mit einer Laserbearbeitungseinheit (15), mit einer Einhausung (2), mit einem im Innern der Einhausung (2) vorgesehenen Arbeitsraum (24) und mit einer Luftfördervorrichtung (22),
• wobei in dem Arbeitsraum (24) eine Werkstückauflage (16) für ein zu bearbeitendes Werkstück (17) angeordnet ist und die Werkstückauflage (16) eine Auflagehauptebene (19) ausbildet und senkrecht zu der Auflagehauptebene (19) luftdurchlässig ist,
• wobei Zuluft mittels der Luftfördervorrichtung (22) mit einer senkrecht zu der Auflagehauptebene (19) der Werkstückauflage (16) verlaufenden Strömungsrichtung auf eine Oberseite der Werkstückauflage (16) richtbar ist und
• wobei mittels der Luftfördervorrichtung (22) bearbeitungsbedingt verunreinigte Zuluft als Abluft von der Oberseite der Werkstückauflage (16) durch die Werkstückauflage (16) hindurch zu der von der Oberseite der Werkstückauflage (16) abliegenden Unterseite der Werkstückauflage (16) hin abführbar ist,
**dadurch gekennzeichnet,**
**dass** stromaufwärts der Werkstückauflage (16) ein von der Zuluft zu der Werkstückauflage (16) hin durchströmter Zuluftkanal (6, 10) vorgesehen ist mit einem senkrecht zu der Strömungsrichtung der Zuluft ausgebildeten Strömungsquerschnitt sowie mit einem werkstückauflagenfernen Kanaleinlass (30) und einer werkstückauflagenseitigen, von der Oberseite der Werkstückauflage (16) beabstandeten und die Werkstückauflage (16) wenigstens teilweise überdeckenden Kanalmündung (31) und
**dass** mittels des Zuluftkanals (6, 10) die Zuluft als laminare Zuluftströmung mit der senkrecht zu der Auflagehauptebene (19) der Werkstückauflage (16) verlaufenden Strömungsrichtung auf die Oberseite der Werkstückauflage (16) richtbar ist, indem der Strömungsquerschnitt des Zuluftkanals (6, 10) in Teilquerschnitte geteilt ist und Teilquerschnittwände (32), welche die Teilquerschnitte begrenzen, sich mit quer zu der Strömungsrichtung der Zuluft bestehendem gegenseitigem Wandabstand in der Strömungsrichtung erstrecken und mit in der Strömungsrichtung verlaufenden und zu der Kanalmündung (31) des Zuluftkanals (6, 10) hin endenden mündungsseitigen Endlängen parallel zueinander und dabei senkrecht zu der Auflagehauptebene (19) der Werkstückauflage (16) ausgerichtet sind.

2. Laserbearbeitungsvorrichtung nach Anspruch 1, **dadurch gekennzeichnet, dass** der Zuluftkanal (6, 10) über eine sich ausgehend von dem Kanaleinlass (30) des Zuluftkanals (6, 10) in der Strömungsrichtung der Zuluft erstreckende und als Einlauflänge vorgesehene Teillänge (33) einen ungeteilten Strömungsquerschnitt aufweist.

3. Laserbearbeitungsvorrichtung nach einem der vorhergehenden Ansprüche, **dadurch gekennzeichnet, dass** die gegenseitigen Wandabstände der Teilquerschnittwände (32) des Zuluftkanals (6, 10) an den mündungsseitigen Endlängen der Teilquerschnittwände (32) einheitlich bemessen sind.

4. Laserbearbeitungsvorrichtung nach einem der vorhergehenden Ansprüche, **dadurch gekennzeichnet, dass** die gegenseitigen Wandabstände der Teilquerschnittwände (32) des Zuluftkanals (6, 10) an zu dem Kanaleinlass (30) des Zuluftkanals (6, 10) hin liegenden einlassseitigen Enden der Teilquerschnittwände (32) uneinheitlich bemessen sind.

5. Laserbearbeitungsvorrichtung nach einem der vorhergehenden Ansprüche, **dadurch gekennzeichnet, dass** zu dem Kanaleinlass (30) des Zuluftkanals (6, 10) hin liegende einlassseitige Enden, der Teilquerschnittwände (32) und/oder zu der Kanalmündung (31) des Zuluftkanals (6, 10) hin liegende mündungsseitige Enden der Teilquerschnittwände (32) in der Strömungsrichtung der Zuluft gegeneinander versetzt sind.

6. Laserbearbeitungsvorrichtung nach einem der vorhergehenden Ansprüche, **dadurch gekennzeichnet, dass** der Zuluftkanal (6, 10) stromaufwärts der Teilquerschnittwände (32) mit einer von der Zuluft in der Strömungsrichtung passierten Blende (34) versehen ist.

7. Laserbearbeitungsvorrichtung nach einem der vorhergehenden Ansprüche, **dadurch gekennzeichnet, dass** sich die Strömungsrichtung der Zuluft zwischen dem Kanaleinlass (30) des Zuluftkanals (6, 10) und der Kanalmündung (31) des Zuluftkanals (6, 10) ändert, indem die Teilquerschnittwände (32) Leitflächen für die zu der Werkstückauflage (16) hin strömende Zuluft ausbilden, wobei die zu der Werkstückauflage (16) hin strömende Zuluft mittels der Teilquerschnittwände (32) vorzugsweise rechtwinklig aus der Strömungsrichtung an dem Kanaleinlass (30) in die Strömungsrichtung an der Kanalmündung (31) lenkbar ist.

8. Laserbearbeitungsvorrichtung nach einem der vorhergehenden Ansprüche, **dadurch gekennzeichnet, dass** für den Arbeitsraum (24) eine im Innern der Einhausung (2) angeordnete und sich senkrecht zu der Auflagehauptebene (19) der Werkstückauflage (16) erstreckende Abtrennung (23) vorgesehen ist, die zu der Kanalmündung (31) des Zuluftkanals (6, 10) hin offen ist und den Arbeitsraum (23) gegen einen im Innern der Einhausung (2) der Laserbearbeitungsvorrichtung ausgebildeten Restraum (25) abgrenzt.

9. Laserbearbeitungsvorrichtung nach Anspruch 8, **dadurch gekennzeichnet, dass** die Abtrennung (23) des Arbeitsraums (24) zum Teil von einem seitlich neben der Werkstückauflage (16) angeordneten Maschinenkörper (13) einer im Innern der Einhausung (2) vorgesehenen Laserbearbeitungsmaschine (12) der Laserbearbeitungsvorrichtung gebildet ist.

10. Laserbearbeitungsvorrichtung nach Anspruch 8 oder Anspruch 9, **dadurch gekennzeichnet, dass** die Kanalmündung (31) des Zuluftkanals (6, 10) einen innerhalb der Abtrennung (23) parallel zu der Auflagehauptebene (19) der Werkstückauflage (16) ausgebildeten Querschnitt des Arbeitsraums (24) vorzugsweise vollständig überdeckt.

11. Laserbearbeitungsvorrichtung nach einem der Ansprüche 8 bis 10, **dadurch gekennzeichnet, dass** die Abtrennung (23) des Arbeitsraums (24) zu einer seitlich neben der Werkstückauflage (16) vorgesehenen Zugangsseite (3) der Werkstückauflage (16) hin offen ist und dass die Einhausung (2) der Laserbearbeitungsvorrichtung an der Zugangsseite (3) der Werkstückauflage (16) eine zugangsseitige Wand (28) mit einer verschließbaren Zugangsöffnung aufweist.

12. Laserbearbeitungsvorrichtung nach einem der vorhergehenden Ansprüche, **dadurch gekennzeichnet, dass** ein Teil der Kanalmündung (31) des Zuluftkanals (6, 10) in der senkrechten Projektion auf die Auflagehauptebene (19) der Werkstückauflage (16) gegenüber der Werkstückauflage (16) mit einem Überstand parallel zu der Auflagehauptebene (19) der Werkstückauflage (16) vorsteht und dass Zuluft, welche an dem Überstand der Kanalmündung (31) des Zuluftkanals (6, 10) in der Strömungsrichtung austritt, mittels einer seitlich neben der Werkstückauflage (16) angeordneten Leitfläche in Richtung auf die Oberseite der Werkstückauflage (16) lenkbar ist.

13. Laserbearbeitungsvorrichtung nach Anspruch 12, **dadurch gekennzeichnet, dass** der Überstand der Kanalmündung (31) des Zuluftkanals (6, 10) gegenüber der Werkstückauflage (16) zu einer seitlich neben der Werkstückauflage (16) vorgesehenen Zugangsseite (3) der Werkstückauflage (16) hin vorsteht und dass die Leitfläche, mittels derer an dem Überstand der Kanalmündung (31) des Zuluftkanals (6, 10) in der Strömungsrichtung austretende Zuluft in Richtung auf die Oberseite der Werkstückauflage (16) lenkbar ist, an der Zugangsseite (3) der Werkstückauflage (16), vorzugsweise an einer zugangsseitigen Wand (28) der Einhausung (2) der Laserbearbeitungsvorrichtung, vorgesehen ist.

14. Laserbearbeitungsvorrichtung nach einem der vorhergehenden Ansprüche, **dadurch gekennzeichnet, dass** der Zuluftkanal (6, 10) einen oberen Zuluftkanal (6, 10) bildet und dass zusätzlich zu dem oberen Zuluftkanal (6, 10) an der Unterseite der Werkstückauflage (16) ein unterer Zuluftkanal (8, 11) vorgesehen ist, durch welchen sekundäre Zuluft mittels einer Luftfördervorrichtung (22) als sekundäre Zuluftströmung mit einer parallel zu der Auflagehauptebene (19) der Werkstückauflage (16) verlaufenden anfänglichen Strömungsrichtung auf eine seitlich neben der Werkstückauflage (16) angeordnete untere Leitfläche (41) richtbar ist, mittels derer die sekundäre Zuluftströmung aus der anfänglichen Strömungsrichtung in eine senkrecht zu der Auflagehauptebene (19) der Werkstückauflage (16) zu der Oberseite der Werkstückauflage (16) hin verlaufende Strömungsrichtung lenkbar ist.

15. Laserbearbeitungsvorrichtung nach Anspruch 14, **dadurch gekennzeichnet, dass** die untere Leitfläche (41) für die sekundäre Zuluftströmung an der Einhausung (2) der Laserbearbeitungsvorrichtung vorgesehen ist, vorzugsweise von der Einhausung (2) der Laserbearbeitungsvorrichtung ausgebildet ist.

16. Laserbearbeitungsvorrichtung nach Anspruch 14 oder Anspruch 15, **dadurch gekennzeichnet, dass** die Werkstückauflage (16) eine seitlich neben der Werkstückauflage (16) vorgesehene Zugangsseite (3) aufweist und dass die sekundäre Zuluftströmung an der Zugangsseite (3) der Werkstückauflage (16) aus der anfänglichen Strömungsrichtung in die senkrecht zu der Auflagehauptebene (19) der Werkstückauflage (16) zu der Oberseite der Werkstückauflage (16) hin verlaufende Strömungsrichtung lenkbar ist.

17. Laserbearbeitungsvorrichtung nach einem der Ansprüche 14 bis 16, **dadurch gekennzeichnet, dass** mittels des unteren Zuluftkanals (8, 11) die sekundäre Zuluft als laminare sekundäre Zuluftströmung mit der anfänglichen Strömungsrichtung auf die untere Leitfläche (41) richtbar ist, indem der Strömungsquerschnitt des unteren Zuluftkanals (8, 11) in Teilquerschnitte geteilt ist und Teilquerschnittwände (38), welche die Teilquerschnitte begrenzen, sich mit quer zu der Strömungsrichtung der sekundären Zuluft bestehendem gegenseitigem Wandabstand in der Strömungsrichtung erstrecken und mit in der Strömungsrichtung verlaufenden und zu einer leitflächenseitigen Kanalmündung (37) des unteren Zuluftkanals (8, 11) hin endenden leitflächenseitigen Endlängen parallel zueinander in der anfänglichen Strömungsrichtung der sekundären Zuluft ausgerichtet sind.

18. Laserbearbeitungsvorrichtung nach Anspruch 17, **dadurch gekennzeichnet,**
• **dass** der untere Zuluftkanal (8, 11) über eine sich ausgehend von einem leitflächenfernen Kanaleinlass (36) des unteren Zuluftkanals (8, 11) in der Strömungsrichtung der sekundären Zuluft erstreckende und als Einlauflänge vorgesehene Teillänge (39) einen ungeteilten Strömungsquerschnitt aufweist und/oder
• **dass** die gegenseitigen Wandabstände der Teilquerschnittwände (38) des unteren Zuluftkanals (8, 11) an den leitflächenseitigen Endlängen der Teilquerschnittwände (38) einheitlich bemessen sind und/oder
• **dass** die gegenseitigen Wandabstände der Teilquerschnittwände (38) des unteren Zuluftkanals (8, 11) an zu einem leitflächenfernen Kanaleinlass (36) des unteren Zuluftkanals (8, 11) hin liegenden einlassseitigen Enden der Teilquerschnittwände (38) uneinheitlich bemessen sind und/oder
• **dass** zu einem leitflächenfernen Kanaleinlass (36) des unteren Zuluftkanals (8, 11) hin liegende einlassseitige Enden der Teilquerschnittwände (38) und/oder zu der Kanalmündung (37) des unteren Zuluftkanals (8, 11) hin liegende mündungsseitige Enden der Teilquerschnittwände (38) in der Strömungsrichtung der sekundären Zuluft gegeneinander versetzt sind und/oder
• **dass** der untere Zuluftkanal (8, 11) stromaufwärts der Teilquerschnittwände (38) mit einer von der sekundären Zuluft in der Strömungsrichtung passierten Blende (40) versehen ist und/oder
• **dass** sich die Strömungsrichtung der sekundären Zuluft zwischen einem leitflächenfernen Kanaleinlass (36) des unteren Zuluftkanals (8, 11) und der Kanalmündung (37) des unteren Zuluftkanals (8, 11) ändert, indem die Teilquerschnittwände (38) des unteren Zuluftkanals (8, 11) Leitflächen für die sekundäre Zuluft ausbilden, wobei die sekundäre Zuluft mittels der Teilquerschnittwände (38) des unteren Zuluftkanals (8, 11) vorzugsweise rechtwinklig aus der Strömungsrichtung an dem Kanaleinlass (36) des unteren Zuluftkanals (8, 11) in die anfängliche Strömungsrichtung an der Kanalmündung (37) des unteren Zuluftkanals (8, 11) lenkbar ist.

19. Laserbearbeitungsvorrichtung nach einem der vorhergehenden Ansprüche, **dadurch gekennzeichnet**, das mehrere Zuluftkanäle (6, 10), gegebenenfalls mehrere obere Zuluftkanäle (6, 10), vorgesehen sind, deren Kanalmündungen (31) parallel zu der Auflagehauptebene (19) der Werkstückauflage (16) nebeneinander angeordnet sind und/oder dass mehrere untere Zuluftkanäle (8, 11) vorgesehen sind mit leitflächenseitigen Kanalmündungen (37), die parallel zu der Auflagehauptebene (19) der Werkstückauflage (16) nebeneinander angeordnet sind.

## Claims

1. Laser machining device for machining workpieces (17) by means of a laser, comprising a laser machining unit (15), a housing (2), a working chamber (24) provided inside the housing (2), and an air conveying device (22),
• a workpiece support (16) for a workpiece (17) to be machined being arranged in the working chamber (24), the workpiece support (16) forming a main support plane (19) and being air-permeable perpendicular to the main support plane (19),
• it being possible for supply air to be directed onto an upper face of the workpiece support (16) by means of the air conveying device (22), in a flow direction extending perpendicularly to the main support plane (19) of the workpiece support (16), and
• it being possible for supply air contaminated by machining to be discharged as exhaust air from the upper face of the workpiece support (16) through the workpiece support (16) to the lower face of the workpiece support (16), which lower face is remote from the upper face of the workpiece support (16), by means of the air conveying device (22),
**characterized in that** a supply air duct (6, 10), through which the supply air flows toward the workpiece support (16), is provided upstream of the workpiece support (16) and has a flow cross-section perpendicular to the flow direction of the supply air, a duct inlet (30) remote from the workpiece support, and a workpiece support-side duct outlet (31) that is spaced apart from the upper face of the workpiece support (16) and at least partially covers the workpiece support (16), and
**in that**, by means of the supply air duct (6, 10), the supply air can be directed as a laminar supply air flow in the flow direction extending perpendicularly to the main support plane (19) of the workpiece support (16) onto the upper face of the workpiece support (16), by the flow cross section of the supply air duct (6, 10) being divided into partial cross sections, and by partial cross-section walls (32), which delimit the partial cross-sections, extending in the flow direction so as to have a mutual wall spacing transverse to the flow direction of the supply air and being oriented with outlet-side end lengths, that end toward the duct outlet (31) of the supply air duct (6, 10), in parallel with one another, and therefore perpendicularly to the main support plane (19) of the workpiece support (16).

2. Laser machining device according to claim 1, **characterized in that** the supply air duct (6, 10) has an undivided flow cross-section over a partial length (33) which extends from the duct inlet (30) of the supply air duct (6, 10) in the flow direction of the supply air and is provided as an inlet length.

3. Laser machining device according to either of the preceding claims, **characterized in that** the mutual wall spacings of the partial cross-section walls (32) of the supply air duct (6, 10) are uniformly dimensioned at the outlet-side end lengths of the partial cross-section walls (32).

4. Laser machining device according to any of the preceding claims, **characterized in that** the mutual wall spacings of the partial cross-section walls (32) of the supply air duct (6, 10) are non-uniformly dimensioned at inlet-side ends of the partial cross-section walls (32) that are arranged toward the duct inlet (30) of the supply air duct (6, 10).

5. Laser machining device according to any of the preceding claims, **characterized in that** inlet-side ends of the partial cross-section walls (32) that are arranged toward the duct inlet (30) of the supply air duct (6, 10) and/or outlet-side ends of the partial cross-section walls (32) that are arranged toward the duct outlet (31) of the supply air duct (6, 10) are offset with respect to one another in the flow direction of the supply air.

6. Laser machining device according to any of the preceding claims, **characterized in that**, upstream of the partial cross-section walls (32), the supply air duct (6, 10) is provided with an aperture (34) through which the supply air passes in the flow direction.

7. Laser machining device according to any of the preceding claims, **characterized in that** the flow direction of the supply air changes between the duct inlet (30) of the supply air duct (6, 10) and the duct outlet (31) of the supply air duct (6, 10) as a result of the partial cross-section walls (32) forming guide surfaces for the supply air flowing toward the workpiece support (16), it being possible for the supply air flowing toward the workpiece support (16) to be guided, preferably at right angles, from the flow direction at the duct inlet (30) into the flow direction at the duct outlet (31) by means of the partial cross-section walls (32).

8. Laser machining device according to any of the preceding claims, **characterized in that** a partition (23) which is arranged inside the housing (2) and extends perpendicularly to the main support plane (19) of the workpiece support (16) is provided for the working chamber (24), which partition is open toward the duct outlet (31) of the supply air duct (6, 10) and delimits the working chamber (23) from a residual chamber (25) formed inside the housing (2) of the laser machining device.

9. Laser machining device according to claim 8, **characterized in that** the partition (23) of the working chamber (24) is in part formed by a machine body (13), arranged laterally beside the workpiece support (16), of a laser machining tool (12) of the laser machining device which laser machining tool (12) is provided inside the housing (2).

10. Laser machining device according to either claim 8 or claim 9, **characterized in that** the duct outlet (31) of the supply air duct (6, 10) covers, preferably completely, a cross section of the working chamber (24) that is formed inside the partition (23) so as to be parallel to the main support plane (19) of the workpiece support (16).

11. Laser machining device according to any of claims 8 to 10, **characterized in that** the partition (23) of the working chamber (24) is open toward an access side (3) of the workpiece support (16) that is provided laterally beside the workpiece support (16), and **in that** the housing (2) of the laser machining device, on the access side (3) of the workpiece support (16), has an access-side wall (28) having a closable access opening.

12. Laser machining device according to any of the preceding claims, **characterized in that** part of the duct outlet (31) of the supply air duct (6, 10) projects in the perpendicular projection onto the main support plane (19) of the workpiece support (16) with respect to the workpiece support (16) having a protrusion parallel to the main support plane (19) of the workpiece support (16), and **in that** supply air, which exits at the protrusion of the duct outlet (31) of the supply air duct (6, 10) in the flow direction, can be guided in the direction of the upper face of the workpiece support (16) by means of a guide surface arranged laterally beside the workpiece support (16).

13. Laser machining device according to claim 12, **characterized in that** the protrusion of the duct outlet (31) of the supply air duct (6, 10) projects, with respect to the workpiece support (16), toward an access side (3) of the workpiece support (16) that is provided laterally beside the workpiece support (16), and **in that** the guide surface, by means of which supply air exiting in the flow direction at the protrusion of the duct outlet (31) of the supply air duct (6, 10) can be guided in the direction of the upper face of the workpiece support (16), is provided on the access side (3) of the workpiece support (16), preferably on an access-side wall (28) of the housing (2) of the laser machining device.

14. Laser machining device according to any of the preceding claims, **characterized in that** the supply air duct (6, 10) forms an upper supply air duct (6, 10) and **in that**, in addition to the upper supply air duct (6, 10), a lower supply air duct (8, 11) is provided on the lower side of the workpiece support (16), through which lower supply air duct secondary supply air can be directed as a secondary supply air flow, by means of an air conveying device (22), in an initial flow direction extending in parallel with the main support plane (19) of the workpiece support (16), onto a lower guide surface (41) arranged laterally beside the workpiece support (16), by means of which lower guide surface the secondary supply air flow can be deflected from the initial flow direction into a flow direction which extends perpendicularly to the main support plane (19) of the workpiece support (16) and toward the upper face of the workpiece support (16).

15. Laser machining device according to claim 14, **characterized in that** the lower guide surface (41) for the secondary supply air flow is provided on the housing (2) of the laser machining device and is preferably formed by the housing (2) of the laser machining device.

16. Laser machining device according to either claim 14 or claim 15, **characterized in that** the workpiece support (16) has an access side (3) provided laterally beside the workpiece support (16), and **in that** the secondary supply air flow on the access side (3) of the workpiece support (16) can be guided from the initial flow direction into the flow direction which extends perpendicularly to the main support plane (19) of the workpiece support (16) and toward the upper face of the workpiece support (16).

17. Laser machining device according to any of claims 14 to 16, **characterized in that**, by means of the lower supply air duct (8, 11), the secondary supply air can be directed as a laminar secondary supply air flow in the initial flow direction onto the lower guide surface (41), by the flow cross section of the lower supply air duct (8, 11) being divided into partial cross-sections, and by partial cross-section walls (38), which delimit the partial cross-sections, extending in the flow direction so as to have a mutual wall spacing transverse to the flow direction of the secondary supply air and being oriented with guide surface-side end lengths, that end toward a guide surface-side duct outlet (37) of the lower supply air duct (8, 11), in parallel with one another in the initial flow direction of the secondary supply air.

18. Laser machining device according to claim 17, **characterized in that**:
• the lower supply air duct (8, 11) has an undivided flow cross section over a partial length (39) that is provided as an inlet length which extends from a duct inlet (36) of the lower supply air duct (8, 11) in the flow direction of the secondary supply air, which duct inlet is remote from the guide surface, and/or
• the mutual wall spacings of the partial cross-section walls (38) of the lower supply air duct (8, 11) are uniformly dimensioned at the guide surface-side end lengths of the partial cross-section walls (38), and/or
• the mutual wall spacings of the partial cross-section walls (38) of the lower supply air duct (8, 11) are non-uniformly dimensioned at inlet-side ends of the partial cross-section walls (38) that are arranged toward a duct inlet (36) of the lower supply air duct (8, 11) that is remote from the guide surface, and/or
• inlet-side ends of the partial cross-section walls (38) that are arranged toward a duct inlet (36) of the lower supply air duct (8, 11) that is remote from the guide surface and/or outlet-side ends of the partial cross-section walls (38) that are arranged toward the duct outlet (37) of the lower supply air duct (8, 11) are offset with respect to one another in the flow direction of the secondary supply air, and/or
• upstream of the partial cross-section walls (38), the lower supply air duct (8, 11) is provided with an aperture (40) through which the secondary supply air passes in the flow direction and/or
• the flow direction of the secondary supply air changes between a duct inlet (36) of the lower supply air duct (8, 11) that is remote from the guide surface and the duct outlet (37) of the lower supply air duct (8, 11), as a result of the partial cross-section walls (38) of the lower supply air duct (8, 11) forming guide surfaces for the secondary supply air, it being possible for the secondary supply air to be guided, preferably at right angles, from the flow direction at the duct inlet (36) of the lower supply air duct (8, 11) into the initial flow direction at the duct outlet (37) of the lower supply air duct (8, 11) by means of the partial cross-section walls (38) of the lower supply air duct (8, 11).

19. Laser machining device according to any of the preceding claims, **characterized in that** a plurality of supply air ducts (6, 10), optionally a plurality of upper supply air ducts (6, 10), are provided, the duct outlets (31) of which are arranged side by side in parallel with the main support plane (19) of the workpiece support (16), and/or **in that** a plurality of lower supply air ducts (8, 11) are provided which have guide surface-side duct outlets (37) which are arranged side by side in parallel with the main support plane (19) of the workpiece support (16).

## Revendications

1. Dispositif d'usinage au laser pour l'usinage de pièces (17) au moyen d'un laser, avec une unité d'usinage au laser (15), avec une enceinte (2), avec un espace de travail (24) prévu à l'intérieur de l'enceinte (2) et avec un dispositif de transport d'air (22),
• dans lequel un support de pièce (16) pour une pièce (17) à usiner est disposé dans l'espace de travail (24) et le support de pièce (16) forme un plan principal de support (19) et est perméable à l'air perpendiculairement au plan principal de support (19),
• dans lequel de l'air entrant peut être dirigé sur une face supérieure du support de pièce (16) au moyen du dispositif de transport d'air (22) avec une direction d'écoulement s'étendant perpendiculairement au plan principal de support (19) du support de pièce (16) et
• dans lequel l'air entrant contaminé par suite de l'usinage peut être évacué au moyen du dispositif de transport d'air (22) en tant qu'air sortant de la face supérieure du support de pièce (16) à travers le support de pièce (16) vers la face inférieure du support de pièce (16) éloignée de la face supérieure du support de pièce (16),
**caractérisé en ce**
**qu'**en amont du support de pièce (16), un conduit d'air entrant (6) par lequel l'air entrant s'écoule vers le support de pièce (16, 10) est prévu avec une section transversale d'écoulement formée perpendiculairement à la direction d'écoulement de l'air entrant ainsi qu'avec une entrée de conduit (30) éloignée du support de pièce et une sortie de conduit (31) côté support de pièce, espacée de la face supérieure du support de pièce (16) et recouvrant au moins partiellement le support de pièce (16), et
**que**, au moyen du conduit d'air entrant (6, 10), l'air entrant peut être dirigé sur la face supérieure du support de pièce (16) sous la forme d'un écoulement d'air entrant laminaire avec la direction d'écoulement s'étendant perpendiculairement au plan principal de support (19) du support de pièce (16), par le fait que la section transversale d'écoulement du conduit d'air entrant (6, 10) est divisée en sections transversales partielles et que des parois de sections transversales partielles (32), qui délimitent les sections transversales partielles, s'étendent dans la direction d'écoulement avec un espacement mutuel de parois existant transversalement à la direction d'écoulement de l'air entrant et sont orientées parallèlement entre elles et perpendiculairement au plan principal de support (19) du support de pièce (16) avec des longueurs terminales côté sortie s'étendant dans la direction d'écoulement et se terminant vers la sortie de conduit (31) du conduit d'air entrant (6, 10).

2. Dispositif d'usinage au laser selon la revendication 1, **caractérisé en ce que** le conduit d'air entrant (6, 10) présente une section transversale d'écoulement non divisée sur une longueur partielle (33) s'étendant à partir de l'entrée de conduit (30) du conduit d'air entrant (6, 10) dans la direction d'écoulement de l'air entrant et prévue comme longueur d'entrée.

3. Dispositif d'usinage au laser selon l'une des revendications précédentes, **caractérisé en ce que** les espacements mutuels des parois de sections transversales partielles (32) du conduit d'air entrant (6, 10) sont dimensionnés de manière uniforme sur les longueurs terminales côté sortie des parois de sections transversales partielles (32).

4. Dispositif d'usinage au laser selon l'une des revendications précédentes, **caractérisé en ce que** les espacements mutuels des parois de sections transversales partielles (32) du conduit d'air entrant (6, 10) sont dimensionnés de manière non uniforme aux extrémités côté entrée des parois de sections transversales partielles (32) qui sont orientées vers l'entrée de conduit (30) du conduit d'air entrant (6, 10).

5. Dispositif d'usinage au laser selon l'une des revendications précédentes, **caractérisé en ce que** les extrémités côté entrée des parois de sections transversales partielles (32) orientées vers l'entrée de conduit (30) du conduit d'air entrant (6, 10) et/ou les extrémités côté sortie des parois de sections transversales partielles (32) orientées vers la sortie de conduit (31) du conduit d'air entrant (6, 10) sont décalées les unes par rapport aux autres dans la direction d'écoulement de l'air entrant.

6. Dispositif d'usinage au laser selon l'une des revendications précédentes, **caractérisé en ce que** le conduit d'air entrant (6, 10) est pourvu, en amont des parois de sections transversales partielles (32), d'un diaphragme (34) par lequel l'air entrant passe dans la direction d'écoulement.

7. Dispositif d'usinage au laser selon l'une des revendications précédentes, **caractérisé en ce que** la direction d'écoulement de l'air entrant change entre l'entrée de conduit (30) du conduit d'air entrant (6, 10) et la sortie de conduit (31) du conduit d'air entrant (6, 10), par le fait que les parois de sections transversales partielles (32) forment des surfaces de guidage pour l'air entrant s'écoulant vers le support de pièce (16), l'air entrant s'écoulant vers le support de pièce (16) pouvant être dévié au moyen des parois de sections transversales partielles (32), de préférence à angle droit, de la direction d'écoulement à l'entrée de conduit (30) dans la direction d'écoulement à la sortie de conduit (31).

8. Dispositif d'usinage au laser selon l'une des revendications précédentes, **caractérisé en ce qu'**il est prévu pour l'espace de travail (24) une cloison (23) qui est disposée à l'intérieur de l'enceinte (2) et s'étend perpendiculairement au plan principal de support (19) du support de pièce (16), laquelle cloison est ouverte vers la sortie de conduit (31) du conduit d'air entrant (6, 10) et délimite l'espace de travail (23) par rapport à un espace restant (25) formé à l'intérieur de l'enceinte (2) du dispositif d'usinage au laser.

9. Dispositif d'usinage au laser selon la revendication 8, **caractérisé en ce que** la cloison (23) de l'espace de travail (24) est formée en partie par un corps de machine (13) d'une machine d'usinage au laser (12) du dispositif d'usinage au laser, le corps de machine (13) étant disposé latéralement à côté du support de pièce (16) et la machine d'usinage au laser (12) étant prévue à l'intérieur de l'enceinte (2).

10. Dispositif d'usinage au laser selon la revendication 8 ou la revendication 9, **caractérisé en ce que** la sortie de conduit (31) du conduit d'air entrant (6, 10) recouvre de préférence complètement une section transversale de la chambre de travail (24), la section transversale étant formée à l'intérieur de la cloison (23) parallèlement au plan principal de support (19) du support de pièce (16).

11. Dispositif d'usinage au laser selon l'une des revendications 8 à 10, **caractérisé en ce que** la cloison (23) de la chambre de travail (24) est ouverte vers un côté d'accès (3) du support de pièce (16) prévu latéralement à côté du support de pièce (16) et que l'enceinte (2) du dispositif d'usinage au laser présente, sur le côté d'accès (3) du support de pièce (16), une paroi côté accès (28) avec une ouverture d'accès pouvant être fermée.

12. Dispositif d'usinage au laser selon l'une des revendications précédentes, **caractérisé en ce qu'**une partie de la sortie de conduit (31) du conduit d'air entrant (6, 10) fait saillie en projection verticale sur le plan principal de support (19) du support de pièce (16) par rapport au support de pièce (16) avec un dépassement parallèle au plan principal de support (19) du support de pièce (16) et que l'air entrant, qui sort dans la direction d'écoulement au niveau du dépassement de la sortie de conduit (31) du conduit d'air entrant (6, 10), peut être dévié en direction de la face supérieure du support de pièce (16) au moyen d'une surface de guidage disposée latéralement à côté du support de pièce (16).

13. Dispositif d'usinage au laser selon la revendication 12, **caractérisé en ce que** le dépassement de la sortie de conduit (31) du conduit d'air entrant (6, 10) fait saillie par rapport au support de pièce (16) vers un côté d'accès (3) du support de pièce (16) prévu latéralement à côté du support de pièce (16), et que la surface de guidage, au moyen de laquelle l'air entrant sortant dans la direction d'écoulement au niveau du dépassement de la sortie de conduit (31) du conduit d'air entrant (6, 10) peut être dévié vers la face supérieure du support de pièce (16), est prévue sur le côté d'accès (3) du support de pièce (16), de préférence sur une paroi côté accès (28) de l'enceinte (2) du dispositif d'usinage au laser.

14. Dispositif d'usinage au laser selon l'une des revendications précédentes, **caractérisé en ce que** le conduit d'air entrant (6, 10) forme un conduit d'air entrant supérieur (6, 10) et qu'en plus du conduit d'air entrant supérieur (6, 10), un conduit d'air entrant inférieur (8, 11) est prévu à la face inférieure du support de pièce (16), par lequel de l'air entrant secondaire peut être dirigé au moyen d'un dispositif de transport d'air (22), sous la forme d'un écoulement d'air entrant secondaire avec une direction d'écoulement initiale s'étendant parallèlement au plan principal de support (19) du support de pièce (16), sur une surface de guidage inférieure (41) disposée latéralement à côté du support de pièce (16), au moyen de laquelle l'écoulement d'air entrant secondaire peut être dévié de la direction d'écoulement initiale dans une direction d'écoulement s'étendant perpendiculairement au plan principal de support (19) du support de pièce (16) vers la face supérieure du support de pièce (16).

15. Dispositif d'usinage au laser selon la revendication 14, **caractérisé en ce que** la surface de guidage inférieure (41) pour l'écoulement d'air entrant secondaire est prévue sur l'enceinte (2) du dispositif d'usinage au laser, de préférence formée par l'enceinte (2) du dispositif d'usinage au laser.

16. Dispositif d'usinage au laser selon la revendication 14 ou la revendication 15, **caractérisé en ce que** le support de pièce (16) présente un côté d'accès (3) prévu latéralement à côté du support de pièce (16) et que l'écoulement d'air entrant secondaire peut être dévié, sur le côté d'accès (3) du support de pièce (16), de la direction d'écoulement initiale dans la direction d'écoulement s'étendant perpendiculairement au plan principal de support (19) du support de pièce (16) vers la face supérieure du support de pièce (16).

17. Dispositif d'usinage au laser selon l'une des revendications 14 à 16, **caractérisé en ce que** l'air entrant secondaire peut être dirigé au moyen du conduit d'air entrant inférieur (8, 11) sous la forme d'un écoulement d'air entrant secondaire laminaire avec la direction d'écoulement initiale sur la surface de guidage inférieure (41), en divisant la section transversale d'écoulement du conduit d'air entrant inférieur (8, 11) en sections transversales partielles et en parois de sections transversales partielles (38) qui limitent les sections transversales partielles, s'étendent dans la direction d'écoulement avec un espacement mutuel de parois existant transversalement à la direction d'écoulement de l'air entrant secondaire et sont orientées parallèlement entre elles dans la direction d'écoulement initiale de l'air entrant secondaire avec des longueurs terminales côté surface de guidage s'étendant dans la direction d'écoulement et se terminant vers une sortie de conduit (37) du conduit d'air entrant inférieur (8, 11).

18. Dispositif d'usinage au laser selon la revendication 17, **caractérisé en ce**
• **que** le conduit d'air entrant inférieur (8, 11) présente une section transversale d'écoulement non divisée sur une longueur partielle (39) s'étendant dans la direction d'écoulement de l'air entrant secondaire à partir d'une entrée de conduit (36) du conduit d'air entrant inférieur (8, 11) éloignée de la surface de guidage et prévue comme longueur d'entrée et/ou
• **que** les espacements mutuels des parois de sections transversales partielles (38) du conduit d'air entrant inférieur (8, 11) sont dimensionnés de manière uniforme aux longueurs terminales des parois de sections transversales partielles (38) côté surface de guidage et/ou
• **que** les espacements mutuels des parois de sections transversales partielles (38) du conduit d'air entrant inférieur (8, 11) sont dimensionnés de manière non uniforme aux extrémités côté entrée des parois de sections transversales partielle (38) qui sont orientées vers une entrée de conduit (36) du conduit d'air entrant inférieur (8, 11) éloignée de la surface de guidage et/ou
• **que** des extrémités côté entrée des parois de sections transversales partielles (38) orientées vers une entrée de conduit (36) du conduit d'air entrant inférieur (8, 11) éloignée de la surface de guidage et/ou des extrémités côté sortie des parois de sections transversales partielles (38) orientées vers la sortie de conduit (37) du conduit d'air entrant inférieur (8, 11) sont décalées les unes par rapport aux autres dans la direction d'écoulement de l'air entrant secondaire et/ou
• **que** le conduit d'air entrant inférieur (8, 11) est pourvu, en amont des parois de sections transversales partielles (38), d'un diaphragme (40) par lequel l'air entrant secondaire passe dans la direction d'écoulement et/ou
• **que** la direction d'écoulement de l'air entrant secondaire change entre une entrée de conduit (36) du conduit d'air entrant inférieur (8, 11) éloignée de la surface de guidage et la sortie de conduit (37) du conduit d'air entrant inférieur (8, 11), par le fait que les parois de sections transversales partielles (38) du conduit d'air entrant inférieur (8, 11) forment des surfaces de guidage pour l'air entrant secondaire, l'air entrant secondaire pouvant être dévié au moyen des parois de sections transversales partielles (38) du conduit d'air entrant inférieur (8, 11) de préférence à angle droit de la direction d'écoulement à l'entrée de conduit (36) du conduit d'air entrant inférieur (8, 11) dans la direction d'écoulement initiale à la sortie de conduit (37) du conduit d'air entrant inférieur (8, 11).

19. Dispositif d'usinage au laser selon l'une des revendications précédentes, **caractérisé en ce que** plusieurs conduits d'air entrant (6, 10), éventuellement plusieurs conduits d'air entrant supérieurs (6, 10), sont prévus, dont les sorties de conduit (31) sont disposées les unes à côté des autres parallèlement au plan principal de support (19) du support de pièce (16) et/ou que plusieurs conduits d'air entrant inférieurs (8, 11) sont prévus qui présentent des sorties de conduit (37) côté surface de guidage, qui sont disposées les unes à côté des autres parallèlement au plan principal de support (19) du support de pièce (16).
